# EUROPÄISCHE PATENTSCHRIFT

(11) **EP 1 840 363 B1**
(45) Veröffentlichungstag und Bekanntmachung des Hinweises auf die Patenterteilung: **03.06.2009**
(21) Anmeldenummer: 06025756.5
(22) Anmeldetag: 13.12.2006
(51) Int. Cl.: F02F 11/00, F16J 15/08

(54) **Flachdichtung, insbesondere Zylinderkopfdichtung**
Gasket, in particular cylinder head gasket
Joint plat, en particulier joint de culasse

(30) Priorität: 29.03.2006 DE 102006014386
(43) Veröffentlichungstag der Anmeldung: 03.10.2007
(73) Patentinhaber: ElringKlinger AG, 72581 Dettingen/Erms (DE)
(72) Erfinder: Schumacher, Thomas, 73585 Riederich (DE); Bendl, Klaus, 75038 Oberderdingen (DE); Schweizer, Peter, 72661 Grafenberg (DE)
(74) Vertreter: Bartels & Partner

(56) Entgegenhaltungen:
- EP-A2- 1 066 956
- DE-U1- 20 019 818
- GB-A- 1 412 141

## Beschreibung

Die Erfindung bezieht sich auf eine Flachdichtung in Form einer Zylinderkopfdichtung, mit zumindest einem langgestreckten, metallischen Trägerelement, das sich über mehrere Brennraum-Abdichtzonen für mehrere in Reihe angeordnete Zylinder eines Hubkolbenmotors, erstreckt.

Bei Flachdichtungen dieser Art, insbesondere wenn sie als Zylinderkopfdichtung bei Verbrennungsmotoren vorgesehen sind, sind am Trägerelement üblicherweise außer den Brennraum-Abdichtzonen weitere Abdichtzonen vorhanden, die durch elastomere Dichtungswerkstoffe abgedichtet werden. Bei solchen Abdichtzonen kann es sich unter anderem beispielsweise um Öffnungen handeln, die im Trägerelement als Durchgang für Zylinderkopfschrauben, als Durchlässe für kühlende oder schmierende Fluide, als Durchgänge für mechanische Elemente der Ventilsteuerung oder dergleichen ausgebildet sind. Solche Öffnungen oder Durchgänge sind üblicherweise von am Trägerelement angebrachten elastomeren Dichtlippen, beispielsweise Gummilippen, eingefaßt. Auch die äußeren Ränder des Trägerelementes können mit einer Gummilippe versehen sein.

Durch das DE 200 19 818 U 1 ist eine Flachdichtung bekannt in Form einer Zylinderkopfdichtung mit zumindest einem langgestreckten metallischen Trägerelement, das sich über mehrere Brennraum-Abdichtzonen für mehrere in Reihe angeordnete Zylinder eines Hubkolbenmotors erstreckt. An diese einstückig ausgebildete Zylinderkopfdichtungslage schließt sich eine weitere Flachdichtung für einen Kettenkasten des Hubkolbenmotors an, in dem eine Steuerkette der Ventilsteuerung des Motors geführt ist Die beiden Flachdichtungen, für den Zylinderkopf und den Kettenkasten, sind über eine Verzahnung trennbar miteinander verbunden, wobei bevorzugt ein omegaförmiges Verzahnungselement der einen Flachdichtung in eine korrespondierende Ausnehmung der anderen Flachdichtung eingreift. Die bekannte Flachdichtungslösung kann mehrlagig sein, wobei die verzahnte Trennstelle bevorzugt in jeder Lage gegenüber der anderen benachbarten Lage einen seitlichen Versatz aufweist. Eine entsprechende Lösung ist auch in der GB-A-1 412 141 aufgezeigt, bei der eine Flachdichtung für Kühlkanäle über schwatbenschwanz-ähntiche Einzelverbindungselemente an eine als Flachdichtung ausgebildete Zylinderkopfdichtung anschließbar ist, wobei letztere wiederum einstückig ausgebildet, sich über mehrere in Reihe angeordnete Zylinder eines Hubkolbenmotors erstreckt.

Bei der derart aufgezeigten Verwendung bei Verbrennungsmotoren mit einer Mehrzahl von in Reihe angeordneten Zylindern, beispielsweise sechs und mehr Zylindern, wie sie bei Nutzfahrzeugen üblich sind, ergibt sich aber eine entsprechend große Baulänge des Trägerelementes. Aufgrund der sich durch die große Baulänge ergebenden Instabilität des dünnwandigen, metallischen Trägerelementes ergeben sich insoweit dann Schwierigkeiten bei der Anbringung der Dichtlippen. Um Passgenauigkeit zu gewährleisten werden die Dichtlippen als Einsetzteile (Inserts) vorgefertigt und durch einen Montagevorgang am Trägerelement angebracht.

Im Hinblick auf diesen Stand der Technik stellt sich die Erfindung die Aufgabe, eine Flachdichtung in Form einer Zylinderkopfdichtung, zur Verfügung zu stellen, bei der die Ausbildung der Dichtlippen vereinfacht ist, selbst wenn es sich um eine Dichtung großer Baulänge handelt.

Erfindungsgemäß ist diese Aufgabe durch eine Flachdichtung in Form einer Zylinderkopfdichtung, gelöst, die die Merkmale des Patentanspruches 1 in seiner Gesamtheit aufweist.

Dadurch, dass erfindungsgemäß das Trägerelement für die Zylinderkopfdichtung in mehrere Teilelemente aufgeteilt ist, sich für das jeweilige Teilelement also eine nur einem Teilbetrag der Gesamtbaulänge entsprechende Länge ergibt, eröffnet sich die Möglichkeit, ohne Schwierigkeiten die Dichtlippen dadurch auszubilden, dass das elastomere Material unmittelbar an das Trägerelement angespritzt wird. Die Arbeitsgänge der gesonderten Herstellung von Inserts sowie deren Montage kommen somit in Wegfall.

Vorzugsweise ist ferner vorgesehen, dass zumindest ein sich im wesentlichen über die Länge des Trägerelementes an diesem anliegend erstreckendes Abstützelement vorgesehen und ebenfalls aus mehreren miteinander verbundenen Teilelementen gebildet ist. Hierdurch ist insbesondere die Möglichkeit eines mehrlagigen Aufbaues für die Flachdichtung als Zylinderkopfdichtung erreicht. Das aus mehreren Teilelementen zusammengesetzte Trägerelement, das sich mit diesen in einer Ebene erstreckt, bildet insoweit vorzugsweise die Mittellage einer bevorzugten dreilagig ausgebildeten Zylinderkopfdichtung aus, die über gleichfalls mehrteilig aufgebaute Abstützelemente auf ihrer Ober- und Unterseite als obere und untere Decklage abgestützt und mithin ausgesteift ist. Insgesamt ergibt sich hierdurch ein steifer Dichtungsverbund, der dennoch insbesondere im Bereich der eigentlichen Abdichtstellen die notwendige Dichtelastizität für die sich anschließenden Zylinderräume im Motorblock hat. In diesem Zusammenhang hat es sich als besonders vorteilhaft erwiesen, dass die Anzahl der Teilelemente des Trägerelementes von der Anzahl der Teilelemente der Abstützelemente voneinander verschieden sind, wobei die Stoßstellen der Teilelemente von Trägerelement und der die Decklagen bildenden Abstützelemente in Längsrichtung der Flachdichtung axial voneinander beabstandet sind. Da insoweit die Stoßstellen der verschiedenen Lagen zumindest von einer Decklage zu der Mittellage axial versetzt sind, ergibt dies eine zusätzliche Aussteifung des gesamten mehrlagigen Verbundes. Auch lassen sich dergestalt thermisch eingebrachte Spannungen gut beherrschen und in die Struktur der Flachdichtung einleiten. Regional auftretende Spannungsspitzen sind somit ebenso kompensiert wie etwaige Beuleffekte in den Einzelblechlagen. Aufgrund der modularen Ausgestaltung lassen sich darüber hinaus die Einzeldichtlagen mit ihren Teilelementen baukastenartig in Abhängigkeit der Anzahl an Zylindereinheiten zusammensetzen, was sich innerhalb der Fertigung als besonders kostengünstig erwiesen hat.

Bei Dichtungen, bei denen außer dem Trägerelement an einer Seite oder an beiden Seiten ein sich im wesentlichen über die gesamte Länge des Trägerelementes erstreckendes Abstützelement vorgesehen ist, kann die Anordnung so getroffen sein, dass auch das jeweilige Abstützelement aus miteinander verbundenen Teilelementen gebildet ist.

Vorzugsweise ist hierbei eine zweite Verbindungseinrichtung vorhanden, die sowohl zwischen Teilelementen beider Abstützelemente als auch Teilelementen des Trägerelementes wirksam ist.

Bei der zwischen den Teilelementen des Trägerelementes wirksamen ersten Verbindungseinrichtung kann es sich in vorteilhafter Weise um eine Nietverbindung handeln, während als zweite Verbindungseinrichtung eine Verklammerung vorgesehen sein kann, die durch Haltenasen gebildet ist, die an einem der Abstützelemente als vorspringende Teile einstückig angeformt und für den Verklammerungseingriff mit dem anderen Abstützelement verformbar sind. In vorteilhafter Weise kann bei solcher Gestaltung in einem einzigen Arbeitsgang durch Verpressen der jeweiligen Verbindungselemente der Nietverbindung und der Verklammerung die Verbindung hergestellt werden.

Nietverbindung und Verklammerung sind vorzugsweise so gestaltet, dass eine eng begrenzte Relativbewegung jeweils verbundener Teilelemente möglich ist, um die Möglichkeit einer Kompensation von Änderungen der Geometrie der Bauelemente aufgrund thermischer oder dynamischer Belastungen zu bieten.

Nachstehend ist die Erfindung anhand eines in der Zeichnung dargestellten Ausführungsbeispieles im einzelnen erläutert. Es zeigen:
- Fig. 1A und 1B in Draufsicht jeweils eine Hälfte eines Ausführungsbeispieles der erfindungsgemäßen Flachdichtung in Form einer Zylinderkopfdichtung für einen Sechszylinderreihenmotor, wobei in Fig. 1A die Dichtungshälfte für die Zylinder eins bis drei und in Fig. 1B die Dichtungshälfte für die Zylinder vier bis sechs dargestellt ist;
- Fig. 2 einen gegenüber Fig. 1A und 1B stark vergrößert gezeichneten Teilschnitt entsprechend der Schnittlinie II-II von Fig. 1A;
- Fig. 3 einen im gleichen Maßstab wie Fig. 2 dargestellten Teilschnitt entsprechend der Schnittlinie III-III von Fig. 1A;
- Fig. 4 einen in selbem Maßstab wie Fig. 2 und 3 gezeichneten Teilschnitt entsprechend der Linie IV-IV von Fig. 1B;
- Fig. 5 eine Draufsicht eines den Zylindern eins und zwei zugeordneten Teilelementes des Trägerelementes des Ausführungsbeispieles der Flachdichtung;
- Fig. 6 in der Fig. 5 entsprechender Draufsicht das den Zylindern drei und vier zugeordnete, mittlere Teilelement des Trägerelementes des Ausführungsbeispieles;
- Fig. 7 in den Fig. 5 und 6 entsprechender Draufsicht das den Zylindern fünf und sechs zugeordnete Teilelement des Trägerelementes des Ausführungsbeispieles;
- Fig. 8 eine Draufsicht des den Zylindern eins bis drei zugeordneten Teilelementes des unteren Abstützelementes des Ausführungsbeispieles;
- Fig. 9 einen in gleichem Maßstab wie Fig. 2 bis 4 gezeichneten Teilschnitt entsprechend der Linie IX-IX von Fig. 8;
- Fig. 10 einen in gleichem Maßstab wie Fig. 9 gezeichneten Teilschnitt entsprechend der Schnittlinie X-X von Fig. 8;
- Fig. 11 einen in gleichem Maßstab wie Fig. 9 und 10 gezeichneten Teilschnitt entsprechend der Linie XI-XI von Fig. 8;
- Fig. 12 einen in gleichem Maßstab wie Fig. 9 bis 11 gezeichneten Teilschnitt entsprechend der Linie XII-XII von Fig. 6 und
- Fig. 13 einen in gleichem Maßstab wie Fig. 9 bis 12 gezeichneten Teilschnitt entsprechend der Linie XIII-XIII von Fig. 6.

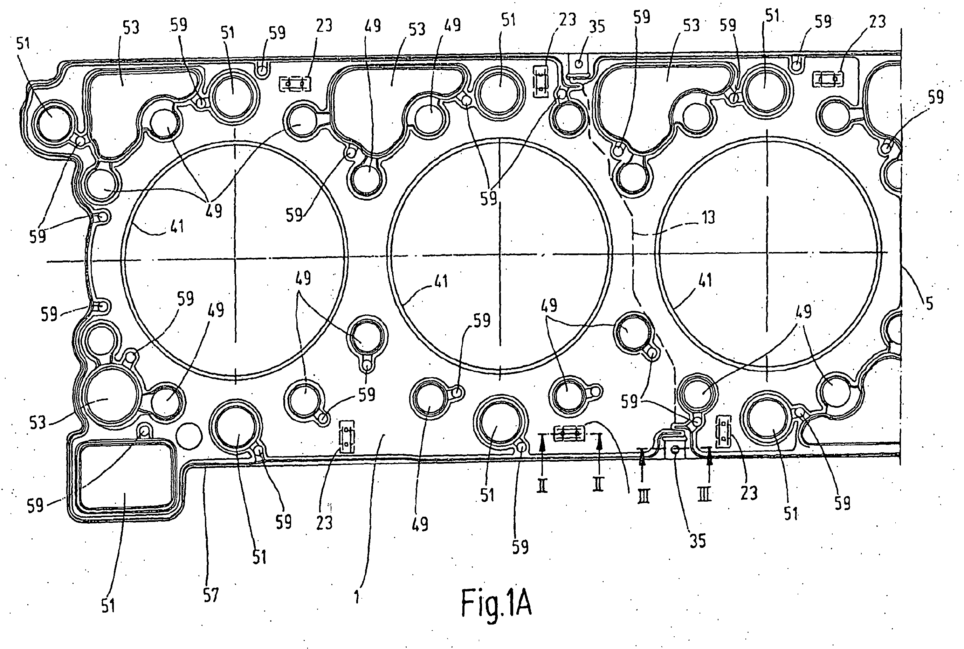

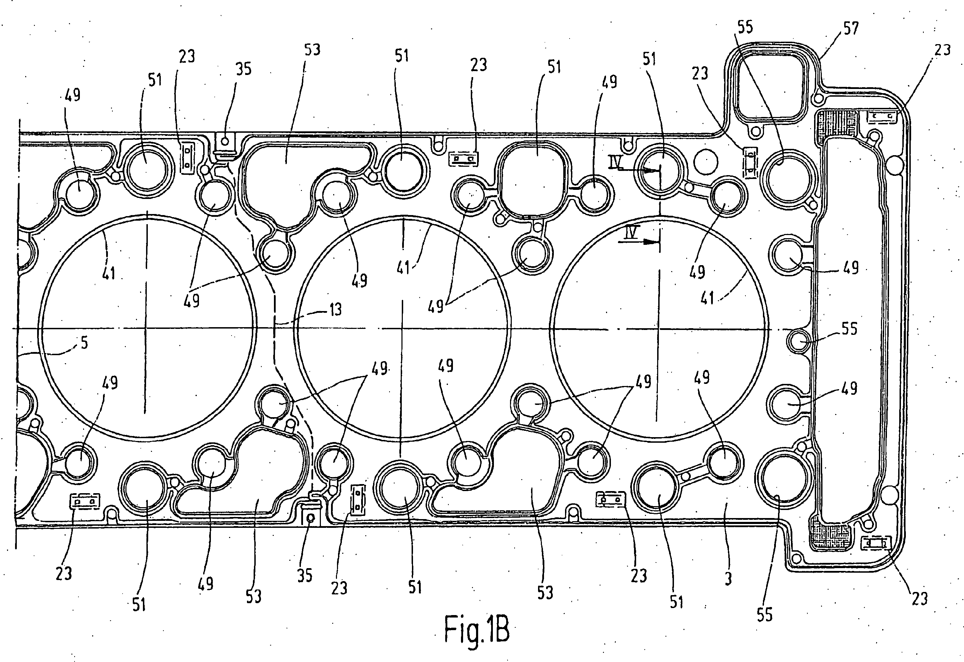

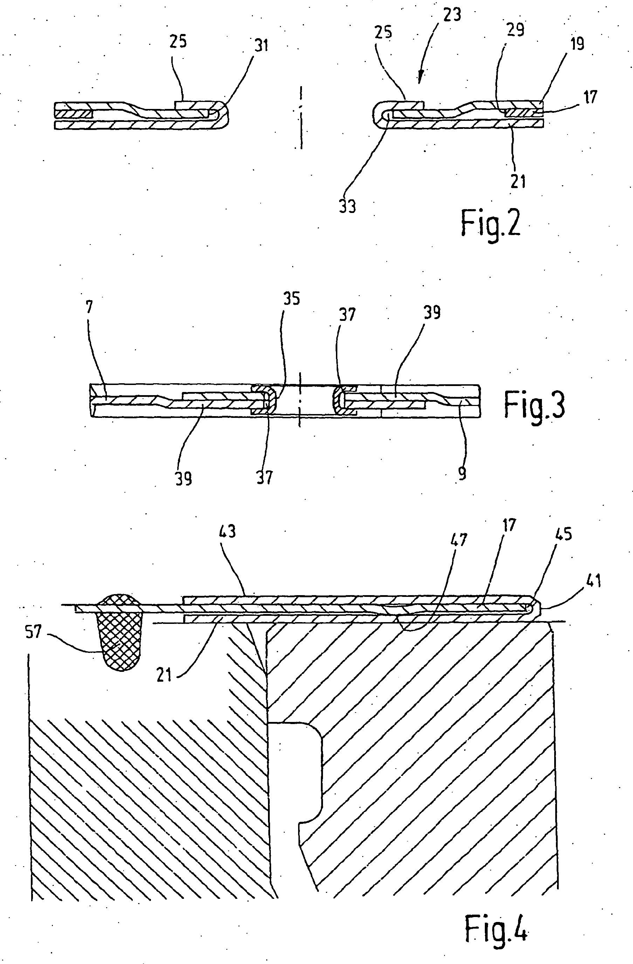

Nachstehend ist die Erfindung anhand eines Beispieles einer Zylinderkopfdichtung für einen Sechszylinderreihenmotör erläutert. Fig. 1A und 1B zeigen in Draufsicht das zur Verwendung fertig gestellte Ausführungsbeispiel (Anlieferungszustand), wobei Fig. 1A den Bereich der Zylinder eins bis drei und Fig. 1B den Bereich der Zylinder vier bis sechs zeigt. Das vorliegende Ausführungsbeispiel ist ein Verbund aus drei metallischen Dichtungslagen, wobei in der Draufsicht von Fig. 1A und 1B die oberste Lage in Gänze sichtbar ist, nämlich ein erstes Teilelement 1 und ein zweites Teilelement 3 eines oberen Abstützelementes 19 (Fig. 2) zu sehen sind, das dadurch gebildet ist, dass erstes Teilelement 1 und zweites Teilelement 3 an ihren geraden Verbindungsrändern, jeweils mit 5 bezeichnet, bündig aneinander stoßend miteinander verbunden sind.

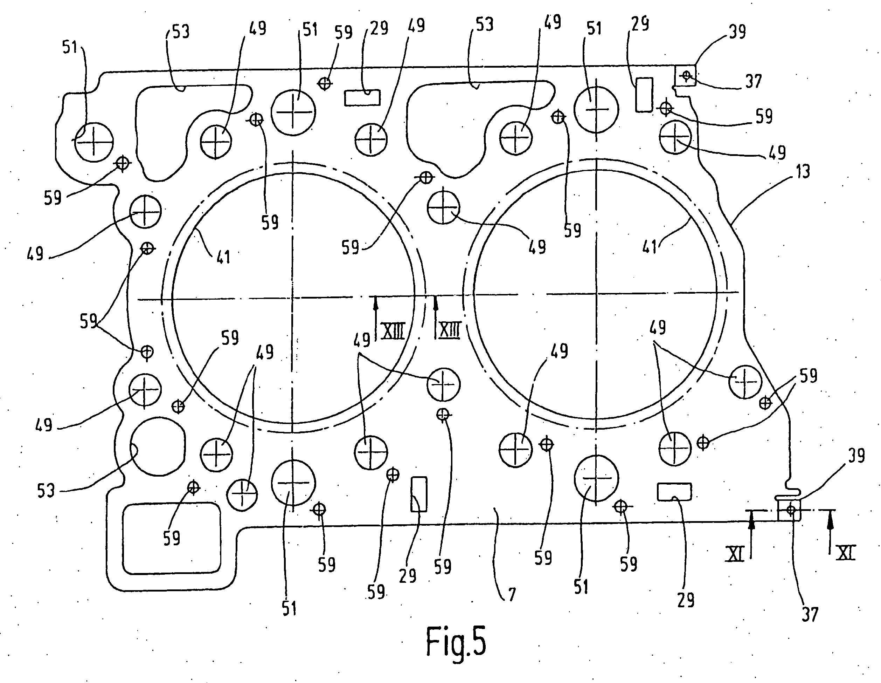

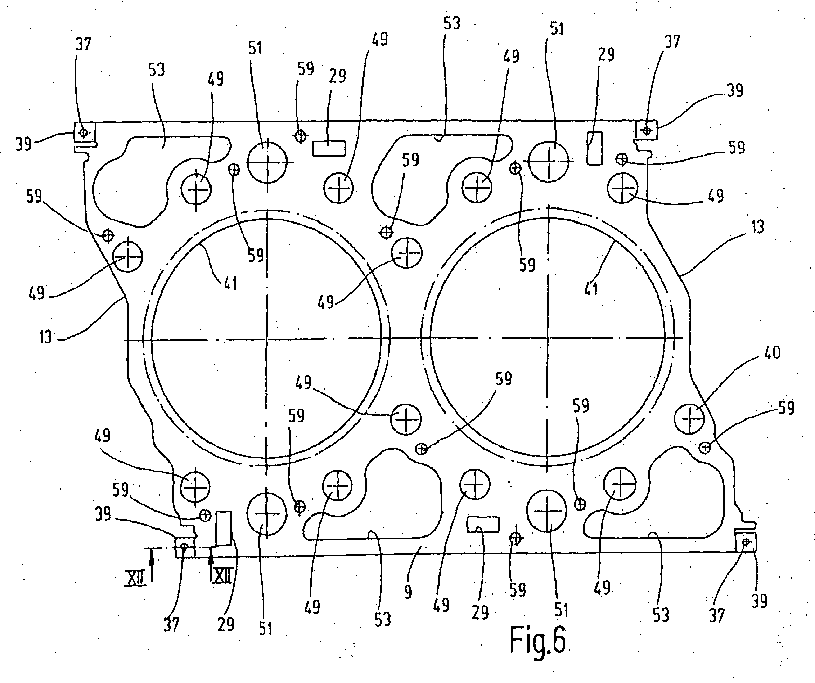

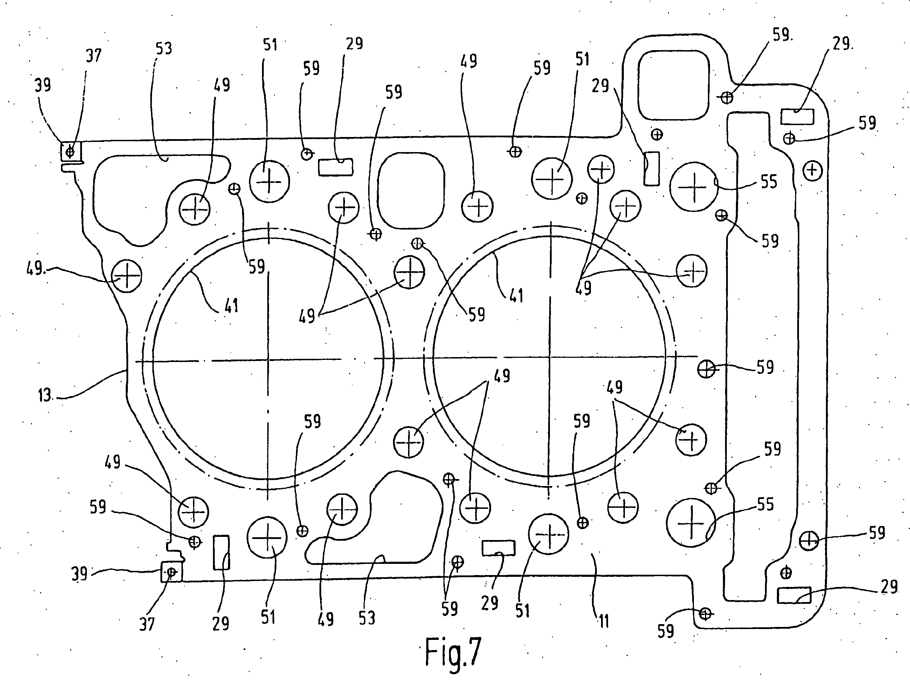

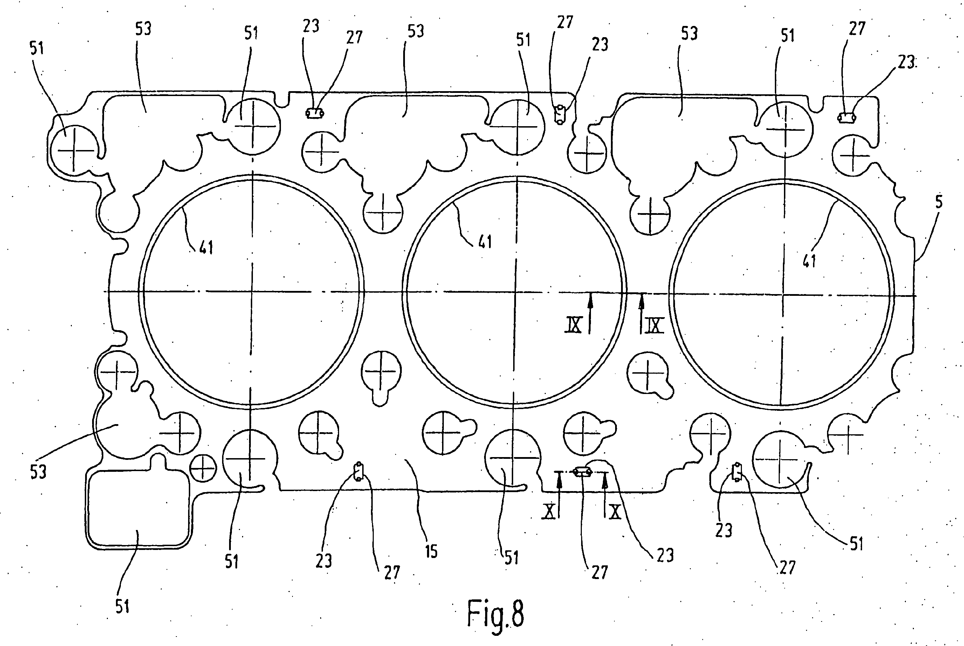

Unterhalb des aus den Teilelementen 1 und 3 gebildeten oberen Abstützelementes 19 befindet sich das Trägerelement 17, das aus drei miteinander verbundenen Teilelementen 7 (Fig. 5), 9 (Fig. 6) und 11 (Fig. 7) zusammengesetzt ist, die ebenfalls miteinander verbunden sind, wobei diese Teilelemente 7, 9 und 11 an Verbindungsrändern 13 aneinander stoßend miteinander verbunden sind. Das Trägerelement 17 bildet die mittlere Lage, unter der sich wiederum ein unteres Abstützelement 21 (Fig. 2) befindet, welches, wie das in Fig. 1A und 1B zu sehende obere Abstützelement, ebenfalls aus zwei Teilelementen zusammengesetzt ist, deren Umriss den Teilelementen 1 und 3 entspricht und von denen lediglich das den Zylindern eins bis drei zugeordnete Teilelement 15 in Fig. 8 gezeigt ist. Wie aus Fig. 1A und 1B ersichtlich ist, befindet sich die Stoßstelle der Teilelemente von oberem und unterem Abstützelement, nämlich der Verbindungsrand 5, gegenüber der Stoßstelle der Teilelemente 7, 9, 11 des Trägerelementes 17 axial versetzt, wie aus Fig. 1A und 1B deutlich zu ersehen ist, in denen die Verbindungsränder 13 der Teilelemente. 7, 9 und 11 des Trägerelementes 17 strichpunktiert eingezeichnet sind.

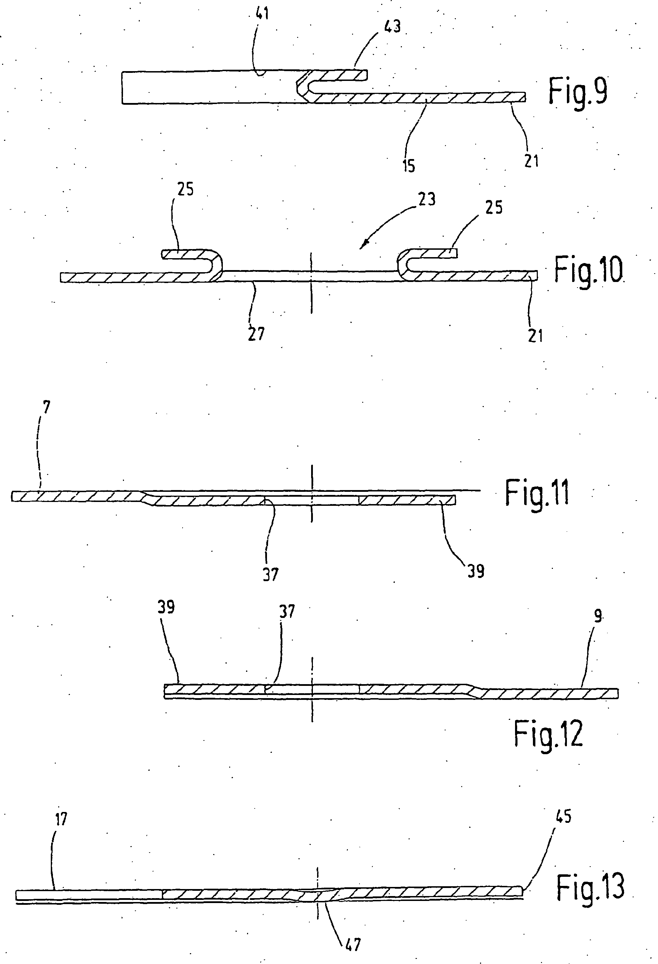

Der dreilagige Aufbau der Zylinderkopfdichtung aus Trägerelement 17, das aus den Teilelementen 7, 9 und 11 zusammengesetzt ist, dem oberen Abstützelement 19, das aus den Teilelementen 1 und 3 zusammengesetzt ist, sowie aus dem unteren Abstützelement 21, das aus den Teilelementen 15 zusammengesetzt ist, kann am augenfälligsten aus Fig. 2 ersehen werden. Diese Fig. zeigt in stark vergrößerter Darstellung (etwa fünffache Größe der tatsächlichen praktischen Ausführungsform) die Gestaltung einer Verbindungseinrichtung in Form einer Verklammerung, die zwischen unterem Abstützelement 21, Trägerelement 17 und oberem Abstützelement 19 wirksam ist. Wie Fig. 1A und 1B zeigen, sind die Stellen einer solchen Verklammerung, in der Fig. jeweils mit 23 bezeichnet, über die gesamte Fläche der Dichtung verteilt angeordnet. Jede dieser Verklammerungen 23 ist durch am unteren Abstützelement 21 angeformte Haltenasen 25 gebildet, wie dies anhand der Fig. 10 näher ersichtlich ist, die einen Teilschnitt entsprechend der Linie X-X von Fig. 8 zeigt.

Hieraus ist ersichtlich, dass die Haltenasen 25 an einer Ausklinkung 27 im unteren Abstützelement 21, d. h. entsprechend der Fig. 8 im Teilelement 15, nach oben ausgebogen und in zueinander entgegengesetzte Richtungen umgelegt sind. Dabei erstrecken sich die Haltenasen 25 durch Ausnehmungen 29 hindurch, die in den Teilelementen 7, 9 und 11 des Trägerelementes 17 gebildet sind, bis zu der von den Haltenasen 25 übergriffenen Oberseite des oberen Abstützelementes 19, wo sie den Klammereingriff bildend anliegen. Wie aus Fig. 2 deutlich zu ersehen ist, ist die Größe der Ausnehmungen 29 im Trägerelement 17 so groß gewählt, dass das obere Abstützelement 19 mittels einer Abbiegung über den Rand der Ausnehmung 29 in Anlage an das untere Abstütz- element 21 gelangen kann, wo es durch den Klammereingriff der Haltenasen 25 gehalten ist, wobei das Trägerelement 17 als mittlere Lage mit verklammert ist. Wie aus Fig. 2 ebenfalls zu ersehen ist, ist die im oberen Abstützelement 19 für den Durchtritt der Haltenasen 25 vorgesehene Öffnung 31 so bemessen, dass zwischen deren Öffnungsrand und der Umfassung durch die Haltenasen 25 ein kleiner Freiraum 33 gebildet ist. Aufgrund dieses Freiraumes 33 sowie des am Rand der Ausnehmungen 29 des Trägerelementes 17 gebildeten Freiraumes, ist an jeder der Verklammerungen 23 eine eng begrenzte Relativbewegung der verklammerten Lagen zueinander möglich.

Wie aus den Fig. ersichtlich ist, sind die Verklammerungen 23 im Wechsel um 90° zueinander verdreht, wie dies besonders deutlich auch aus Fig. 5 bis 7 ersichtlich ist, wo die Richtung der Längsachse der als Langlöcher ausgebildeten Ausnehmungen 29 deutlich sichtbar ist. An den Verklammerungen 23 sind also begrenzte Relativbewegungen in zueinander senkrechten Richtungen möglich.

Wie bereits erwähnt, ist als Verbindungseinrichtung zwischen den Teilelementen 7, 9 und 11 des Trägerelementes 17 eine Nietverbindung vorgesehen, deren Einzelheiten in Fig. 3 näher gezeigt sind, die ein vergrößerter Teilschnitt entsprechend der Schnittlinie III-III von Fig. 1A ist. Diese Fig. 3 zeigt, beispielhaft für die übrigen Nietverbindungen, lediglich die Nietverbindung zwischen den Teilelementen 7 und 9 des Trägerelementes 17. Wie die Fig. 11 und 12 zeigen, die Teilschnitte entsprechend den Linien XI-XI von Fig. 5 bzw. Xll-XII von Fig. 6 sind, befinden sich in den zu verbindenden Teilelementen 7 und 9 für den Durchtritt eines zugeordneten Hohlniet 35 jeweils Durchgangslöcher 37. Diese sind in Befestigungslappen 39 ausgebildet, die sich an beiden Seitenrändern der Teilelemente 7 und 9 in Längsrichtung vorstehend erstrecken, siehe Fig. 5 bis 7. Diese Befestigungslappen 39 sind, wie Fig. 11 und 12 verdeutlichen, aus der Ebene der jeweiligen Teilelemente 7 bzw. 9 gegensinnig leicht abgekröpft. Fig. 3 zeigt den vernieteten Zustand, bei dem die Befestigungslappen 39, die mit ihrem abgekröpften Bereich aneinander liegen, durch die Nietränder der Hohlniet 35 übergriffen sind. Außerdem zeigt Fig. 3, dass der Durchmesser der Durchgangslöcher 37 in den Teilelementen 7 und 9 etwas größer ist als der äußere Schaftdurchmesser des Hohlniet 35, so dass wiederum ein kleiner Freiraum gebildet wird, der eine eng begrenzte Relativbewegung zwischen vernieteten Teilelementen, bei der Darstellung von Fig. 3 der Teilelemente 7 und 9, ermöglicht.

Die Fig. 4, 9 und 13 zeigen Einzelheiten der Bauweise an den Brennraumöffnungen 41. Dabei zeigt Fig. 9 anhand eines Teilschnittes entsprechend der Schnittlinie IX-IX von Fig. 8, dass das untere Abstützelement 21 (gezeigt ist in Fig. 8 und 9 dessen Teilelement 15), einen umgelegten Randteil 43 aufweist. Dieser bildet, wie die in Fig. 4 gezeigte Schnittdarstellung entsprechend der Schnittlinie IV-IV von Fig. 1B zeigt, eine Randeinfassung für den Öffnungsrand 45 am Trägerelement 17, wobei eine im Trägerelement 17 kreisbogenartig in Richtung auf das untere Abstützelement 21 hin ausgewölbte Sicke 47 mit eingefaßt wird. Wie aus Fig. 4 ebenfalls zu ersehen ist, befindet sich zwischen dem Öffnungsrand 45 und der Einfassung durch den umgelegten Randteil 43 wiederum ein geringer Freiraum zum Ermöglichen einer eng begrenzten Relativbewegung zwischen Trägerelement und Einfassung.

In der bei derartigen Zylinderkopfdichtungen üblichen Weise sind im Trägerelement 17 und in den Abstützelementen 19 und 21 außer den Brennraumöffnungen 41 und außer den für die Verklammerung 23 vorgesehenen Ausklingungen 27 und Ausnehmungen 29 eine verhältnismäßig große Anzahl von Durchgängen vorgesehen (die in den Zeichnungen nicht sämtliche bezeichnet und beziffert sind), namentlich Schraubenlöcher 49 für Zylinderkopfschrauben, Durchlässe 51 für Kühlwasserkanäle, Durchlässe 53 für Ölrücklauf, Durchlässe 55 für Drucköl. Weitere, nicht bezeichnete Durchlässe dienen unter anderem der Kurbelgehäuseentlüftung, bilden einen Zugang zum Räderkasten der Ventilsteuerung und dergleichen. Diese Löcher, Durchlässe, sowie weitere, nicht bezeichnete und bezifferte Durchgänge sind in der bei derartigen Dichtungen üblichen Weise, ebenso wie die Aussenränder der Dichtung, von Dichtlippen eingefaßt, die aus einem elastomeren Dichtungswerkstoff, beim vorliegenden Beispiel aus Gummi, bestehen. Die Form der Abdichtzonen, die durch diese Dichtlippen, die (in Fig. 1A und 1B lediglich summarisch an jeweils einer einzigen Stelle sowie in Fig. 4) mit 57 bezeichnet sind, ist aus der Draufsicht der Fig. 1A und 1B erkennbar. Wie ersichtlich erstrecken sich die Dichtlippen 57 auch längs des gesamten Außenrandes der Dichtung mit Ausnahme der Vernietungsbereiche mit den Hohlnieten 35, sowie als Einfassung rings um die Durchlässe, die für kühlende und schmierende Fluide und dergleichen vorgesehen sind. Die in Richtung des Motorblockes angeordneten Dichtlippen der Mittel- oder Trägerlage sind in axialer Bauhöhe länger ausgebildet als die darüberliegenden Dichtlippen, die in Richtung der oberen Decklage der mehrlagigen Zylinderkopfdichtung weisen und insoweit in Richtung des Zylinderkopfes vor dem Einbau vorragen.

Da die erfindungsgemäße Flachdichtung sowohl was das Trägerelement 17 anbelangt als auch was die Abstützelemente 19 und 21 anbelangt, jeweils aus mehreren Teilelementen zusammengesetzt ist, die jeweils nur einen Bruchteil der gesamten Baulänge aufweisen, ist es möglich, die Dichtlippen 57 unmittelbar an die Teilelemente 7, 9 und 11 des Trägerelementes 17 anzuspritzen. In den Zeichnungen sind die Anspritzstellen, die am Trägerelement 17 zur Bildung der verschiedenen, durch die Dichtlippen 57 gebildeten Abdichtzonen vorgesehen sind, lediglich in Fig. 1A sowie 5 bis 7 gekennzeichnet und mit 59 bezeichnet. Die Dichtlippen 57 bilden wulstartig leicht aus der Hauptebene der Dichtung vorstehende Dichtleisten, wie dies bei derartigen Dichtungen üblich ist.

Wie Fig. 1A und 1B deutlich zeigen, sind die Teilelemente 1 und 3 des oberen Abstützelementes 19, ebenso wie dies beim unteren Abstützelement 21 der Fall ist, an einem jeweils geradlinigen Verbindungsrand 5, also mit geradliniger Stoßstelle, miteinander verbunden. Wie besonders deutlich aus Fig. 6 zu ersehen ist, sind dagegen beim Trägerelement 17 die Stoßstellen zwischen den Teilelementen 7, 9 und 11 durch einen zur Längsrichtung jeweils schräg und gewellt verlaufenden Verbindungsrand 13 gebildet. Der Verlauf dieser Verbindungsränder 13 ist so gewählt, dass die Stoßstelle keines der Löcher oder Durchlässe in den Teilelementen 7, 9 und 11 tangiert. Wie ebenfalls aus Fig. 6 zu ersehen ist, hat das in dieser Fig. gezeigte Teilelement 9 eine symmetrische Gestalt, genauer gesagt besteht eine Symmetrie bezüglich schräg verlaufender Symmetrieachsen, die sich jeweils über beide Brennraumöffnungen 41 hinweg zwischen den Schraubenlöchern 37 für die Hohlniete erstrecken.

Es versteht sich, dass, insbesondere wenn es sich um sehr langgestreckte Motorblöcke handelt, mehrere identisch ausgebildete Teilelemente vorhanden sein können, beispielsweise mehrere mit einer derart symmetrischen Gestalt, wie dies beim Beispiel von Fig. 6 der Fall ist. Aufgrund entsprechender Symmetrie können solche Teilelemente in ihrer Hauptebene um 180° verdreht jeweils miteinander verbunden werden, was den Ablauf des Montagevorganges vereinfachen kann.

## Patentansprüche

1. Flachdichtung in Form einer Zylinderkopfdichtung, mit zumindest einem langgestreckten, metallischen Trägerelement (17), das sich über mehrere Brennraumöffnungen (41) mit Brennraum-Abdichtzonen für mehrere in Reihe angeordnete Zylinder eines Hubkolbenmotors, erstreckt, **dadurch gekennzeichnet, dass** das Trägerelement (17) durch mehrere Teilelemente (7, 9,11) gebildet ist, die jeweils mindestens eine Brennraumöffnung (41) aufweisen und die mittels einer Verbindungseinrichtung (35, 37) an jeweils einem Verbindungsrand (13) einander anstoßend miteinander verbunden sind und dass der Verlauf des jeweiligen Verbindungsrandes (13) derart gewählt ist, dass die dahingehende Stoßstelle keine der jeweiligen Brennraumöffnungen (41) in den Teilelementen (7,9,11) tangiert.

2. Flachdichtung nach Anspruch 1, **dadurch gekennzeichnet, dass** zumindest ein sich im wesentlichen über die Länge des Trägerelementes (17) an diesem anliegend erstreckendes Abstützelement (19, 21) vorgesehen und ebenfalls aus mehreren miteinander verbundenen Teilelementen (1, 3, 15) gebildet ist.

3. Flachdichtung nach Anspruch 2, **dadurch gekennzeichnet, dass** die Anzahl der Teilelemente (7, 9, 11) des Trägerelementes (17) von der Anzahl der Teilelemente (1, 3, 15) mindestens eines der Abstützelemente (19, 21) voneinander verschieden sind und dass die Stoßstellen der Teilelemente (7, 9, 11; 1, 3, 15) von Trägerelement (17) und mindestens einem der Abstützelemente (19, 21) in Längsrichtung der Flachdichtung axial voneinander beabstandet sind.

4. Flachdichtung nach Anspruch 3, **dadurch gekennzeichnet, dass** die Anzahl der Teilelemente (7, 9, 11) des Trägerelementes (17) um mindestens eins größer ist als die Anzahl der Teilelemente (1, 3, 15) mindestens eines der Abstützelemente (19, 21).

5. Flachdichtung nach Anspruch 3 oder 4, **dadurch gekennzeichnet, dass** zur Realisierung eines dreilagigen Dichtungsaufbaues das Trägerelement (17) zumindest teilweise zwischen zwei Abstützelementen (19, 21) aufgenommen ist, die als obere und untere Decklagen ausgebildet sind.

6. Flachdichtung nach einem der Ansprüche 2 bis 5, **dadurch gekennzeichnet, dass** beidseits des Trägerelementes (17) je ein Abstützelement (19 rund 21) vorgesehen ist und dass eine zweite Verbindungseinrichtung (23) vorhanden ist, die sowohl zwischen Teilelementen (1, 3, 15) beider Abstützelemente (19, 21) als auch Teilelementen (7, 9, 11) des Trägerelementes (17) wirksam ist.

7. Flachdichtung nach einem der Ansprüche 1 bis 6, **dadurch gekennzeichnet, dass** die zwischen den Teilelementen (7, 9, 11) des Trägerelementes (17) wirksame erste Verbindungseinrichtung einer Nietverbindung (35, 37) ist.

8. Flachdichtung nach Anspruch 7, **dadurch gekennzeichnet, dass** die zweite Verbindungseinrichtung durch eine Verklammerung (23) gebildet ist.

9. Flachdichtung nach Anspruch 8, **dadurch gekennzeichnet, dass** die Verklammerung (23) Haltenasen (25) aufweist, die an den Teilelementen (15) eines der Abstützelemente (21) als vorspringende Teile einstükkig angeformt und für den Verklammerungseingriff mit betreffenden Teilelementen des anderen Abstützelementes (19) verformbar sind.

10. Flachdichtung nach Anspruch 9, **dadurch gekennzeichnet, dass** die Haltenasen (25) sich von einem Teilelement (15) des unteren Abstützelementes (21) durch Ausnehmungen (29) im Trägerelement (17) und durch Öffnungen (31) im oberen Abstützelement (19) hindurch erstrekken und zum Klammereingriff an dessen Oberseite anliegend umgelegt sind und dass die Ausnehmungen (29) im Trägerelement (17) so groß bemessen sind, dass der von den Haltenasen (25) übergriffene Bereich des oberen Abstützelementes in dem durch die jeweilige Ausnehmung (29) des Trägerelementes (17) geschaffenen Freiraum an die Oberseite des unteren Abstützelementes (21) anlegbar ist.

11. Flachdichtung nach einem der Ansprüche 7 bis 10, **dadurch gekennzeichnet, dass** die zwischen Teilelementen (7, 9, 11) des Trägerelementes (17) wirksame Nietverbindung durch Hohlniete (35) gebildet ist.

12. Flachdichtung nach Anspruch 11, **dadurch gekennzeichnet, dass** zur Bildung der Nietverbindung an beiden Seitenrändern der aneinander stoßenden Teilelemente (7, 9, 11) des Trägerelementes (17) in dessen Längsrichtung vorstehende Lappen (39) angeformt sind, die durch eine Abkröpfung aus der Hauptebene des Trägerelementes (17) bereichsweise versetzt sind und an denen ein jeweils zugeordneter, gegensinnig abgekröpfter Lappen (39) des angrenzenden Teilelementes (7, 9, 11) anliegt, und dass die Lappen (39) jeweils mit einem Durchgangsloch (37) für ein Hohlniet (35) versehen sind.

13. Flachdichtung nach Anspruch 12, **dadurch gekennzeichnet, dass** die Durchgangslöcher (37) einen geringfügig größeren Durchmesser als der Schaft des sie durchgreifenden Hohlniet (35) besitzen.

14. Flachdichtung nach einem der Ansprüche 1 bis 13, **dadurch gekennzeichnet, dass** am Trägerelement (17) unmittelbar (bei 59) angespritzte elastomere Dichtlippen (57) Abdichtzonen an Randbereichen der Flachdichtung und an Öffnungen bilden, die in dieser beispielsweise für den Durchtritt von Schrauben oder als Durchlässe für kühlende und schmierende Fluide oder dergleichen ausgebildet sind.

## Claims

1. A flat gasket in the form of a cylinder head gasket having at least one elongate metallic support element (17) which extends over a number of combustion chamber openings (41) with combustion chamber sealing zones for a number of cylinders of a piston engine arranged in a row, **characterised in that** the support element (17) is formed by a number of sub-components (7, 9, 11) which respectively have at least one combustion chamber opening (41) and which are connected to one another, abutting against one another on a respective connection edge (13), by means of a connection device (35, 37), and that the extension of the respective connection edge (13) is chosen such that the abutment point to this effect is not tangent to any of the respective combustion chamber openings (41) in the sub-components (7, 9, 11).

2. The flat gasket according to Claim 1, **characterised in that** at least one support element (19,21) substantially extending over the length of the support element (17) while resting against the latter is provided and is also formed from a number of sub-components (1, 3, 15) connected to one another.

3. The flat gasket according to Claim 2, **characterised in that** the number of sub-components (7, 9, 11) of the support element (17) is different to the number of sub-components (1, 13, 15) of at least one of the support elements (19, 21) and that the abutment points of the sub-components (7, 9, 11; 1, 3, 15) of the support element (17) and at least one of the support elements (19, 21) are spaced apart from one another axially in the longitudinal direction of the flat gasket.

4. The flat gasket according to Claim 3, **characterised in that** the number of sub-components (7, 9, 11) of the support element (17) is greater by at least one than the number of sub-components (1, 3, 15) of at least one of the support elements (19, 21).

5. The flat gasket according to Claim 3 or 4, **characterised in that** in order to produce a triple-layered sealing structure, the support element (17) is accommodated at least partially between two support elements (19, 21) which are formed as the upper and the lower covering layers.

6. The flat gasket according to any of Claims 2 to 5, **characterised in that** a support element (19 and 21) is provided respectively on both sides of the support element (17) and that a second connection device (23) is provided which is effective both between the sub-components (1, 3, 15) of both support elements (19, 25) and the sub-components (7, 9, 11) of the support element (17).

7. The flat gasket according to any of Claims 1 to 6, **characterised in that** the first effective connection device between the sub-components (7, 9, 11) of the support element (17) is a riveted connection (35, 37).

8. The flat gasket according to Claim 7, **characterised in that** the second connection device is formed by stapling (23).

9. The flat gasket according to Claim 8, **characterised in that** the stapling (23) has retaining collars (25) which are integrally moulded onto the sub-components (15) of one of the support elements (21) as projecting components and which can be deformed for the stapled connection with respective sub-components of the other support element (19).

10. The flat gasket according to Claim 9, **characterised in that** the retaining collars (25) extend from a sub-component (15) of the lower support element (21) through recesses (29) in the support element (17) and through openings (31) in the upper support element (19) and are allocated to the stapled connection lying on the upper side of the latter, and that the recesses (29) in the support element (17) are of dimensions such that the region of the upper support element overlapped by the retaining collars (25) can be attached in the free space created by the respective recess (29) of the support element (17) to the upper side of the lower support element (21).

11. The flat gasket according to any of Claims 7 to 10, **characterised in that** the riveted connection effective between the sub-components (7, 9, 11) of the support element (17) is formed by hollow rivets (35).

12. The flat gasket according to Claim 11, **characterised in that** in order to form the riveted connection on both side edges of the sub-components (7, 9, 11) of the support element (17) abutting against one another projecting lugs (39) are integrally moulded in the longitudinal direction of the latter which are offset in regions by a bend away from the main plane of the support element (17) and against which a respectively assigned lug (39), bending away in the opposite direction, of the adjacent sub-component (7, 9, 11) rests, and that the lugs (39) are respectively provided with a through boring (37) for a hollow rivet (35).

13. The flat gasket according to Claim 12, **characterised in that** the through borings (37) have a slightly larger diameter than the shaft of the hollow rivet (35) passing through them.

14. The flat gasket according to any of Claims 1 to 13, **characterised in that** on the support element (17) elastomeric sealing lips (57) injected on directly (59) form sealing zones in peripheral regions of the flat gasket and at openings which are formed in the latter for example for the passage of screws or as passages for cooling or lubricating fluids or the like.

## Revendications

1. Joint plat sous la forme d'un joint de couvercle de culasse, comprenant au moins un élément (17) de support métallique, s'étendant en longueur, qui s'étend sur plusieurs ouvertures (41) de chambre de combustion en ayant des zones d'étanchéité de chambre de combustion pour plusieurs cylindres montés en série d'un moteur à piston à mouvement alternatif, **caractérisé en ce que** l'élément (17) de support est formé par plusieurs sous-éléments (7, 9, 11) qui ont respectivement au moins une ouverture (41) de chambre de combustion et qui sont reliés les uns aux autres en aboutement au moyen d'un dispositif (35, 37) de liaison sur respectivement un bord (13) de liaison et **en ce que** le tracé du bord (13) respectif de liaison est choisi de façon à ce que le point d'aboutement ne touche aucune des ouvertures (41) respectives de chambre de combustion dans les sous-éléments (7, 9, 11).

2. Joint plat suivant la revendication 1, **caractérisé en ce qu'**il est prévu au moins un élément (19, 21) d'appui s'étendant sensiblement sur la longueur de l'élément (17) de support en s'y appliquant et formé également de plusieurs sous-éléments (1, 3, 15) reliés entre eux.

3. Joint plat suivant la revendication 2, **caractérisé en ce que** le nombre des sous-éléments (7, 9, 11) de l'élément (17) de support est différent du nombre des sous-éléments (1, 3, 15) d'au moins l'un des éléments (19, 21) d'appui et ce que les points d'aboutement des sous-éléments (7, 9, 11 ; 1, 3, 15) de l'élément (17) de support d'au moins l'un des éléments (19, 21) d'appui, sont à distance axialement les uns des autres dans la direction longitudinale du joint plat.

4. Joint plat suivant la revendication 3, **caractérisé en ce que** le nombre des sous-éléments (7, 9, 11) et des éléments (17) de support est plus grand d'au moins un, que le nombre des sous-éléments (1, 3, 15) d'au moins l'un des éléments (19, 21) d'appui.

5. Joint plat suivant la revendication 3 ou 4, **caractérisé en ce que** pour la réalisation d'une structure d'étanchéité à trois couches, l'élément 17 support est reçu au moins en partie entre deux éléments (19, 21) d'appui qui sont constitués en couches supérieure et inférieure de recouvrement.

6. Joint plat suivant l'une des revendications 2 à 5, **caractérisé en ce que**, de part et d'autre de l'élément (7) support, est prévu respectivement un élément (19 et 21) d'appui et **en ce qu'**il y a un deuxième dispositif (23) de liaison, qui est efficace tant entre des sous-éléments (1, 3, 15) des deux éléments (19, 21) d'appui qu'également entre des sous-éléments (7, 9, 11) de l'élément (17) de support.

7. Joint plat suivant l'une des revendications 1 à 6, **caractérisé en ce que** le premier dispositif de liaison efficace entre les sous-éléments (7, 9, 11) de l'élément (17) de support ait une liaison (35, 37) par rivets.

8. Joint plat suivant la revendication 7, **caractérisé en ce que** le deuxième dispositif de liaison est formé par un agrafage (23).

9. Joint plat suivant la revendication 8, **caractérisé en ce que** l'agrafage (23) a des becs (25) de maintien, qui sont formés d'une pièce en tant que partie en saillie sur les sous-éléments (15) de l'un des éléments (21) d'appui et qui sont déformables pour la pénétration d'agrafage par des sous-éléments concernés de l'autre élément (19) d'appui.

10. Joint plat suivant la revendication 9, **caractérisé en ce que** les becs (25) de maintien sont traversés par un sous-élément (15) de l'élément (21) inférieur d'appui par des ouvertures (29) ménagées dans l'élément (17) de support et par des ouvertures (31) dans l'élément (19) supérieur d'appui et sont entourés pour la pénétration des agrafes en s'appliquant à son côté supérieur et **en ce que** les évidements (29) de l'élément (17) de support sont si grands que la partie de l'élément supérieur d'appui chevauchée par les becs (25) de maintien peut être mise sur le côté supérieur de l'élément (21) inférieur d'appui dans l'espace libre ménagé par l'évidement (29) respectif de l'élément (17) de support.

11. Joint plat suivant l'une des revendications 7 à 10, **caractérisé en ce que** la liaison par rivets efficace entre des sous-éléments (7, 9, 11) de l'élément (17) de support est formée par des rivets (35) tubulaires.

12. Joint plat suivant la revendication 11, **caractérisé en ce que**, pour former la liaison par rivets, il est formé, sur les bords latéraux des sous-éléments (7, 9, 11) en aboutement l'un avec l'autre de l'élément (17) de support, des pattes (39) qui sont en saillie dans sa direction longitudinale, qui sont décalées par partie par un coude hors du plan principal de l'élément (17) de support et auxquelles s'applique une patte (39) respectivement associée et coudée en sens contraire du sous-élément (7, 9, 11) voisin et **en ce que** les pattes (39) sont munies respectivement d'un trou (37) de traversée pour un rivet (35) tubulaire.

13. Joint plat suivant la revendication 12, **caractérisé en ce que** les trous (37) de passage ont un diamètre légèrement plus grand que le fût du rivet (35) tubulaire, qui y passe.

14. Joint plat suivant l'une des revendications 1 à 13, **caractérisé en ce que** des lèvres (57) d'étanchéité en élastomère, injectées directement (en 59) sur l'élément (17) de support, forment des zones d'étanchéité aux parties marginales du joint plat et sur des ouvertures qui y sont formées, par exemple pour le passage de vis ou comme passages pour des fluides de refroidissement ou de lubrification ou analogues.
